# EUROPEAN PATENT APPLICATION

(11) **EP 0 952 072 A2**
(43) Date of publication of application: **27.10.1999**
(21) Application number: 98120435.7
(22) Date of filing: 28.10.1998
(51) Int. Cl.: B62J 1/00, B62J 1/28

(54) **Process for the production of padded articles, in particular saddles**

(30) Priority: 24.04.1998 IT PD980102
(71) Applicant: S M P SELLE S.a.s., 35020 Casalserugo (IT)
(72) Inventor: Schiavon, Franco, 35020 Casalserugo (IT); Schiavon, Maurizio, 35020 Casalserugo (IT)
(74) Representative: Gustorf, Gerhard, Dipl.-Ing.

(57) **Abstract**

The invention is a new process for the production of saddles partially covered with soft, prestigious, coloured inserts, involving the use of a mould (1.1) equipped in such a way as to house the covering inserts (3) and keep them in the correct position, wherein, in correspondence with the edges of the areas or seats (1.21) housing the inserts (3), the mould (1.1) is provided with a great number of holes and/or microholes connected to ducts (1.22) positioned inside the mould (1.1) and ending in a pressure intake (1.23). The covering inserts (3) can be equipped or combined with small gel pads, in such a way as to obtain different elasticity in different areas of the padding (4), and can have any shape and position, are perfectly adherent to the padding (4) and their edges cannot come off the padding (4); furthermore, all the problems deriving from the excess glue, the incorrect positioning of the inserts (3) or the unstable union are thus eliminated.

## Description

The present invention concerns the production of padded articles like saddles, and in particular it concerns the production of padded saddles with covering inserts.

At present padded saddles covered with fabrics or films are produced, wherein the cover is applied to the saddle through glueing or direct sintering. The glueing process requires that the cover be glued onto the padding after this has already been moulded, be it already joined to the rigid body of the saddle itself or not. The direct sintering process requires that the cover be held in the correct position between the two shells of the mould by means of a frame whose dimensions exceed those of the mould and that the material of which the padding is made be expanded in the mould successively; when this material expands and hardens, it adheres stably to the cover. Successively, the excess edge of the cover is trimmed. Fewer and fewer saddles are being produced with glued cover, since this process is very imprecise and requires several manufacturing phases.

The covering of the saddle carried out at the same time as the sintering process makes production quicker and cheaper, but it involves the total covering of the saddle and the trimming of the excess edge, if necessary.

It is not possible to cover the saddle only partially through the sintering process, since the material of which the padding is made tends to get between the mould and the covering, and thus to give a defective, non-marketable product. In fact, the local or partial covering of the saddle up to now has been obtained only by glueing the single covering parts onto the padding. However, if the glueing process is not carried out perfectly, the various parts of the cover come off after a certain period of usage.

In order to eliminate all the above mentioned inconveniences, a new process for the production of partially covered padded saddles has been designed and implemented: this process also gives a new type of product with features that cannot be obtained otherwise.

The new process for the production of partially covered saddles involves the use of a mould equipped in such a way as to house the covering inserts and keep them in the correct position, and the use of the usual equipment necessary to inject the padding material into the mould.

The mould comprises two parts that can be opened, one of which holds the already shaped rigid body, while the other has the inner concave part shaped in accordance with the shape of the padding to be obtained.

In particular, the part of the mould shaped to house the padding is provided with areas or seats for the covering inserts that must be joined to the saddle padding. In correspondence with the edges of said areas or seats for the covering inserts the mould is provided with a great number of holes and/or microholes connected to ducts that are positioned inside the mould and end into a pressure intake. Said pressure intake is in turn connected to a suitable suction pump.

The number and size of said holes and/or microholes and their distance from the edges of said areas or seats can vary depending on the type of material used for the covering inserts, on the type of material used for the padding, on the padding moulding pressure and/or temperature and other analogous parameters.

Each one of the two parts of the mould is provided, as usual, with appropriate and suitable heating elements that serve to facilitate the expansion of the padding material and to cause and/or interrupt the expansion or hardening reaction of the padding.

The formation of the padding together with the saddle is rapid, simple and follows the main steps described here below.

The body is positioned and fastened onto the relevant part of the mould, while the inside of the shaped part of the mould houses, in the appropriate areas or seats, the covering inserts already cut to measure so that their edge covers exactly the holes and/or microholes provided on the edges of said areas or seats.

Successively, the suction pump is operated and it sucks the edges of the inserts through the ducts and the holes and/or microholes, thus making the inserts adhere to said areas or seats of the mould.

The padding is then moulded in a successive phase: depending on the case, the material is positioned on the lower part of the mould and the two parts of the mould are closed and heated, or the two parts of the mould are closed and the material is injected inside the mould and expands soon afterwards.

In any case, the padding material expands and occupies all the free parts inside the mould, thus adhering to either the body and the covering inserts. The padding material does not penetrate between the covering inserts and the part of the mould to which they adhere, since the vacuum created in correspondence with the edges of the inserts themselves keeps said insert edges constantly adherent to the relevant part of the mould.

It is possible to position covering inserts provided or combined with small pads made of gel or other materials, in such a way as to obtain different elasticity in the different zones of the padding.

The saddle obtained in this way has special and innovative characteristics, since the covering inserts can have any shape and position, are perfectly adherent to the padding and their edges cannot come off, and since there is no glue and the application of the inserts on the padding is not carried out manually the problems deriving from the excess glue, the incorrect positioning of the inserts or the unstable union are thus eliminated.

The following is just an example among many of a practical application of the invention in question, illustrated in the enclosed drawings.

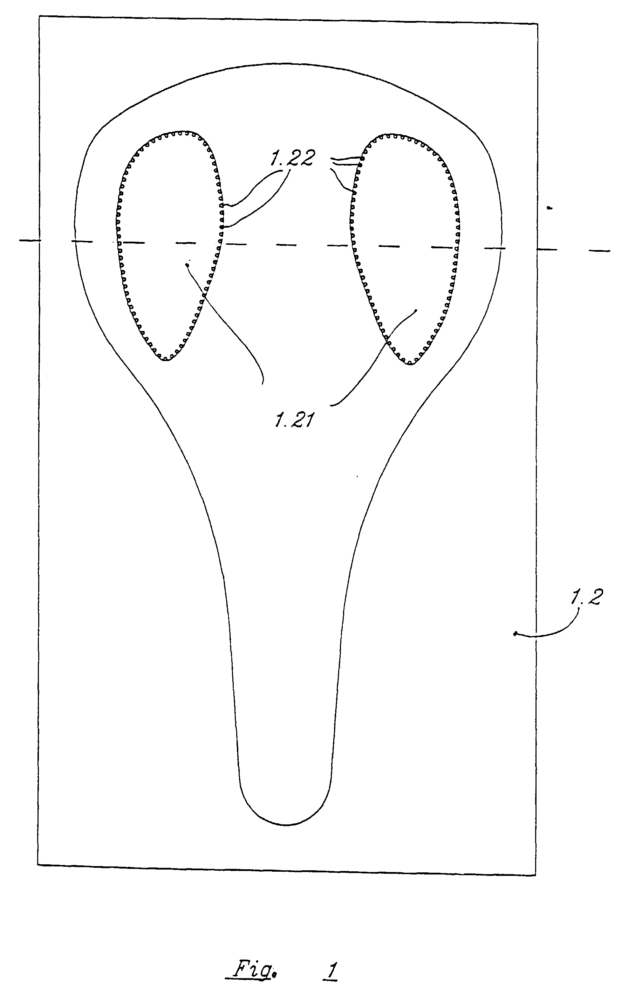

Figure 1 is a plan view of the mould part that shapes the saddle padding, while Figure 2 is a vertical section of the closed mould.

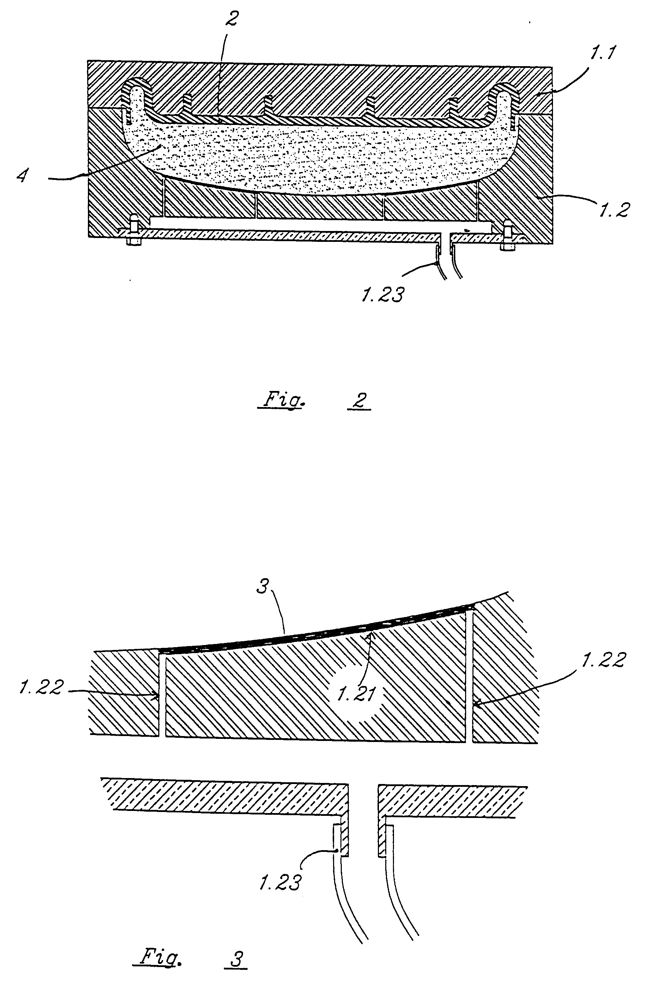

Figure 3 shows a detail of the mould.

The upper part of the mould (1.1) that holds the body (2) and the lower part of the mould (1.2) provided with areas or seats (1.21) for the covering inserts (3) are clearly visible.

The seats (1.21) of the lower part of the mould (1.2) are provided, in correspondence with their edges, with holes or microholes and the relevant ducts (1.22) connected to the suction pump through a further duct (1.23).

The material of which the padding is made (4) occupies all the space available, since during its expansion or sintering it adheres to the body (2) and to the covering inserts (3).

Said inserts can be of any type and material, provided that it is suitable for the use, like fabric, spunbonded fabric, leather, imitation leather, film, even with interposed layers of gel or other particularly soft materials.

The above are the basic outlines of the invention, on the basis of which the technician will be able to put it into effect; any change which may be necessary upon implementation is to be regarded as completely protected by the present invention, provided that it is based on the same innovative concept described herein.

Therefore, with reference to the above description and to the attached drawings, the following claims are put forth.

## Claims

1. Process for the production of padded articles, in particular saddles, through the expansion of the padding material inside a mould that comprises a male and a female part and in which the body is inserted, characterized in that one or more parts of the mould are provided with areas or seats for the positioning of covering inserts for the padding, the edges of said seats being provided with holes connected to a suction pump.

2. Process for the production of saddles in accordance with claim 1, characterized in that when the insert is positioned the pump suction on the holes holds the inserts on the mould.

3. Process for the production of saddles in accordance with claim 2, characterized in that said covering inserts comprise a layer of gel or other particularly soft materials and are positioned on the moulds before the expansion or sintering of the padding material.

4. Saddle characterized in that it is produced in accordance with the process described in the previous claims and in that it comprises one or more areas provided with additional covering.
